# EUROPEAN PATENT SPECIFICATION

(11) **EP 2 178 670 B1**
(45) Date of publication and mention of the grant of the patent: **07.09.2011**
(21) Application number: 09795164.4
(22) Date of filing: 09.07.2009
(51) Int. Cl.: B23K 9/00

(54) **STUD FOR STUD WELDING**
BOLZEN ZUR BOLZENSCHWEISSUNG
GOUJON POUR SOUDAGE À L'ARC

(30) Priority: 09.07.2008 DE 102008033373
(43) Date of publication of application: 28.04.2010
(73) Proprietor: Newfrey LLC, Newark, Delaware 19711 (US)
(72) Inventor: DREXLER, Frank, 63683 Ortenberg (DE); SCHNEIDER, Joachim, 35630 Ehringshausen (DE); KORTMANN, Hans-Gerd, 35394 Giessen (DE)
(74) Representative: Witte, Weller & Partner
(86) International application number: PCT/US2009/050047
(87) International publication number: WO 2010/006124

(56) References cited:
- WO-A1-95/33400
- WO-A1-02/056422
- WO-A2-2004/033923
- DE-A1-102004 054 675
- US-A- 3 597 573
- US-A- 5 207 588

## Description

The present invention relates to a stud for stud welding, having a shank, having an axially adjoining flange which projects radially relative to the shank, and having an annular section which axially adjoins the flange and whose front, radially extending annular surface is designed as a welding surface which is to be welded to a workpiece (see WO-A-2004 033923).

### Background Art

The invention also relates to a fastening arrangement having a workpiece and a stud welded to the workpiece and also relates to a method of welding a stud to a workpiece and to the use of such a stud for welding onto a workpiece.

The invention generally concerns the field of stud welding. This welding process is used, inter alia, to a great extent in the field of vehicle technology. In this case, studs are welded to body sheets and serve as anchors for plastic fastening elements (clips), dashboards, etc.

The trend in recent years is to reduce the thickness of the body sheets in order to reduce, for example, the weight of the vehicle. The welding of studs onto body sheets that are becoming increasingly thinner turns out to be difficult. As a rule, the studs have a conically tapering welding surface. In order to fuse this surface during the stud welding, a relatively high input of energy is required. This may lead to "burn-through" of the body sheet.

Consequently, a welding stud which has a concave recess and is designed for capacitor discharge welding has been proposed in document US-A-3,671,710. In this case, the recess together with the outside diameter of the stud results in an annular flange. This is intended to improve the uniformity of the molten pool.

Document DE 196 11 711 A1 discloses a welding element having an annular flange structure. The annular flange has a margin narrowing in cross section, such that an approximately linear edge is obtained at the front end of the stud. The welding edge is set down on the workpiece. The stud is then pulled back for forming an arc. Finally, the stud is pushed into the complete molten pool. An approximately annular welding spot results overall, and a cavity is formed between the stud and the workpiece in the interior of this annular welding spot. It is mentioned that the configuration of the stud is intended to permit welding of the stud to relatively thin sheets by means of the drawn-arc process.

Finally, document WO 2004/033923 A1 discloses a fastening element in which a stud is welded onto a sheet (in particular a sandwich sheet). The stud has a region which serves as a predetermined breaking point in order to achieve a defined failure case. A nut is screwed onto the stud, and the strength of the stud is adapted to the strength of the nut, such that the nut breaks first before the stud breaks. Provided the nut does not break, the stud breaks before the stud is torn out of the sheet.

In other words, a torque is not applied to the stud until during the assembly when a plastic fastening element or the like is actually put onto the stud. If a defect affecting the stud and/or the sheet occurs at this moment for certain reasons, relatively expensive rework is necessary. For at this moment the sheet is already painted as a rue and the repair of the welding spot and the re-application of a stud consequently require complicated subsequent treatment of the surface of the body sheet.

The stud used has a shank, a flange section and an axially adjoining annular section which together form a head section. The ratio of axial length of the annular section to axial length of the head section (which is formed by the flange and the annular section) is to be less than 50%, in particular within the range of 25% to 35%. Considerable importance is also attached to other dimensions or ratios of dimensions of the head section in this application. The outside diameter of the head section is designed to be round in this case.

Against the above background, an object of the invention is to specify a cost-effective stud, an improved fastening arrangement and an improved method of welding a stud onto a workpiece, wherein the workpiece has a small thickness and wherein a situation in which expensive rework has to be carried out in the assembly area in the event of failure of a welded joint can be avoided.

### Disclosure of the Invention

This object is firstly achieved by a stud for stud welding, having a shank, having an axially adjoining flange which projects radially relative to the shank and whose outer circumference is of polygonal design in order to be able to apply a test torque to the stud by means of a tool, and having an annular section which axially adjoins the flange and whose front, radially extending annular surface is designed as a welding surface which is to be welded to a workpiece, wherein the annular section directly adjoins the flange, and the annular section and the flange form a head section which has a uniform outside diameter throughout, and wherein the polygonal shape of the flange extends over the annular section up to its front annular surface.

The above object is also achieved by a fastening arrangement having a workpiece and a stud of the type according to the invention welded to the workpiece, wherein the workpiece has a thickness of less than 1 mm, in particular less than 0.8 mm.

The above object is also achieved by a method of welding a stud to a workpiece and of checking the strength of the welded joint, comprising the steps:
- providing a stud of the type according to the invention;
- welding the stud onto the workpiece, in particular by drawn-arc stud welding; and
- attaching a tool to the head section of the stud and applying a predetermined torque to the stud in order to check the strength of the welded joint.

Finally, the above object is achieved by the use of a stud according to the invention for welding onto a workpiece, the thickness of which is less than 1 mm, in particular less than 0.8 mm.

The stud according to the invention is suitable in particular for welding onto very thin workpieces, such as thin body sheets. There has been a trend in recent years for sheets of less than 1 mm, in particular less than 0.8 mm or even 0.6 mm and smaller. Due to the design of the annular section and of a welding surface formed as an annular surface, welding can be carried out in this case with a relatively small input of energy, such that the risk of burn-through of the sheet is reduced. Due to the design of the polygonal shape at the outside diameter of the head section, it is possible to check the strength of the welded joint. This is preferably done during the body-in-white phase, that is to say, for example, immediately after the stud has been welded onto the workpiece. Consequently, any possible defective welded joint can be repaired in good time. Expensive rework, as would be necessary in the event of a repair during the assembly phase, is not necessary. Furthermore, it has surprisingly been found that, despite the polygonal shape throughout (which extends over the annular section up to front annular surface), essentially no disadvantages arise during the forming of the arc. Furthermore, the stud can be produced cost-effectively on account of the polygonal shape throughout at the head section.

The object is therefore completely achieved.

It is especially preferred if the stud is made in one piece of metal, in particular steel.

However, the stud can generally also be made of another metal, such as aluminum for example.

Furthermore, it is advantageous if the stud is produced by a cold forming process, in particular in a one-stage process with relatively little forming. This makes it possible for the shape of the stud to be of relatively simple design and for the polygonal shape to extend over the entire outer circumference of the head section. In the case of large-flange studs, a multi-stage forming process may also be used. Even in the case of a multi-stage process, the polygonal shape can be produced by forming. This may be done, for example, by the larger flange being upset and deburred. The final shape is then formed in an additional press stage using a press tool.

The shank may be of cylindrical design but preferably has a thread. The thread may be a metric thread but is in particular a coarse thread.

The polygonal shape is preferably an octagonal shape.

In this embodiment, the stud can be produced cost-effectively. Furthermore, a comparatively simple tool can be used in order to exert a test torque on the already welded-on stud. However, the polygonal shape may also be a hexagonal shape or another polygonal shape. Furthermore, the expression "polygonal shape" in this case is also intended to refer to the fact that the outer circumference is toothed or has another shape differing from a circular shape.

It is especially preferred if the ratio of the axial length of the head section to the outside diameter of the head section is within the range of 1/7 to 3/4, in particular within the range of 1/3 to 3/4 in the case of standard studs or 1/6 to 1/2 the case of large-flange studs.

In this way, the axial length of the head section can be designed to be relatively large, such that it is comparatively simple to attach a tool for exerting a test torque.

According to a further preferred embodiment, the ratio of the axial length of the flange to the axial length of the head section is within the range of 3/10 to 5/10.

In this way, the annular section can be designed to be relatively long in relation to the flange. Therefore firstly weight can be saved. Secondly the head section overall can have a comparatively small axial length, such that a low overall height is obtained. This applies in particular if the ratio of the axial length of the flange to the axial length of the head section is less than 5/10.

In the case of large-flange studs, the ratio of the axial length of the flange to the axial length of the head section is as a rule markedly below 5/10.

In the case of studs having a large flange diameter, it is advantageous to provide a locating point for automatic feeding into welding installations and for the assembly (screwing on or mounting attachments). Said locating point is provided on the shank end face opposite the head section and has a smaller diameter than the shank.

Furthermore, large-flange studs can also be provided pre-completed with plastic parts (plastic nuts, plastic components, etc.) or metal parts (cap nuts, flange nuts for ground studs or metal components) and be welded automatically or manually.

It goes without saying that the abovementioned features and the features still to be explained below can be used not only in the respectively specified combination but rather also in other combinations or on their own without departing from the scope of the present invention.

### Brief Description of the Drawings

Exemplary embodiments of the invention are shown in the drawing and described in more detail below. In the drawing:
Fig. 1 shows a partly sectioned side view of a stud according to an embodiment of the invention;
Fig. 2 shows a view of the stud of Fig. 1 from the front; and
Fig. 3 shows a fastening arrangement with a workpiece and a stud according to Fig. 1 and 2 welded onto the workpiece.

### Mode for Carrying Out the Invention

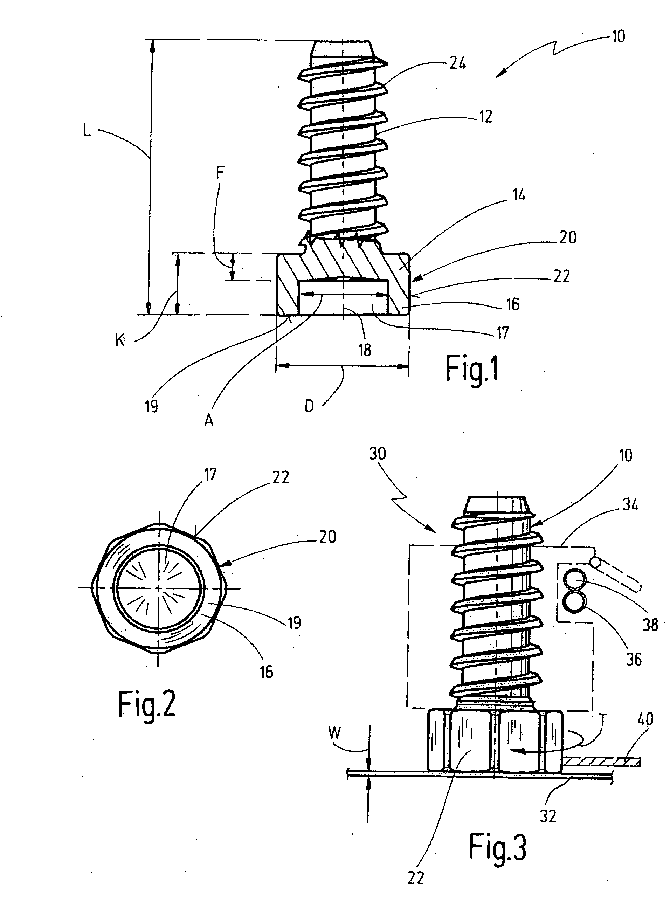

An embodiment of a stud according to the invention is designated generally by 10 in Fig. 1 and 2.

The stud 10 has a shank 12, adjoining which in the axial direction is a flange 14. Adjoining the flange 14 in the axial direction is an annular section 16, within which a recess 17 of circular cross section is located.

A longitudinal axis of the stud 10 is shown at 18.

A front annular surface 19 is formed on the front end of the annular section 16. The recess 17 extends from the front annular surface 19 up to the flange 14.

On the whole, the flange 14 and the annular section 16 form a head section 20, the outer circumference of which has a polygonal shape 22, in the present case an octagonal shape.

A coarse thread 24 is formed on the shank 12. The stud 10 has an overall length L. The axial length of the head section 20 is designated by K in Fig. 1. The axial length of the flange section is designated by F in Fig. 1. An outside diameter of the head section 20 is designated by D, and an inside diameter of the recess 17 is designated by A.

The ratio of the axial length F of the flange 14 to the axial length K of the head section 20 is within the range of 3/10 to 5/10, in the present case approximately within the range of 4.5/10.

The ratio of the inside diameter A of the recess 17 to the outside diameter D of the head section 20 is within the range of 5/10 to 8/10, preferably within the range of 6/10 to 7/10.

The ratio of the axial length K of the head section 20 to the overall length L of the stud 10 is within the range of 1/10 to 4/10, preferably within the range of 1.5/10 to 3/10. In the present case the ratio is about 2/10.

The front annular surface 19 extends in the radial direction. The inner circumference of the annular section 16 is of circular design in cross section.

Fig. 3 shows a fastening arrangement 30 according to the invention, said fastening arrangement 30 having a stud 10 of the type shown in Fig. 1 and 2, said stud 10 being welded onto a workpiece 32. The workpiece 32 is a metal sheet, preferably made of the same material as the stud 10 or of a material similar to that of the stud 10. The workpiece 32 has a thickness W which is less than 1.0 mm, in particular less than 0.8 mm. In the present case the thickness W is about 0.6 mm.

As indicated schematically in Fig. 3, the stud 10 is suitable for fixing a plastic fastening element or clip 34, as is known per se in the prior art. The clip 34 may contain, for example, a receptacle 36 for a component 38. The component 38 may be; for example, a cable or a cable harness, a brake line or a fuel line.

In this case, the clip 34 bears on that side of the flange 14 which points toward the shank 12, as shown in Fig. 3.

In the field of vehicle technology, the clip 34 is fastened to the stud 10 as a rule in an "assembly area". In this case, the body shell of the vehicle is produced and the workpiece 32 including the stud 10 is as a rule already painted, such that the requisite attachments can be carried out. The stud 10 is welded onto the workpiece 32 beforehand in a "body-in-white phase".

Directly after the body-in-white phase and before further processing steps, it is preferably checked whether the welded joint between the stud 10 and the workpiece 32 has sufficient strength.

In this case, during the body-in-white phase or before the assembly phase, a torque T is exerted on the stud 10 about the longitudinal axis 18 by means of a tool 40 (indicated schematically in Fig. 3). In the process, the tool 40 acts on the head section 20 provided with the polygonal shape. The torque T that is applied in this case is a predetermined torque which a stud 10 correctly welded to the workpiece 32 can absorb without damaging the welded joint and/or the stud 10.

In addition, the polygonal shape of the head section 14 enables mounted components or plastic fastening elements (clips 34), given the provision of suitable receptacles, to be able to act on the polygonal shape 22 in order to permit anti-rotation locking or adjustment in the correct position.

The stud 10 can generally be used universally. It may be provided with or without a pre-completed plastic part (for example welding of the stud 10 to the workpiece, wherein the plastic fastening element is already pre-fitted on the stud 10, as is advantageous, for example, in underbody fastening).

In this embodiment, care should possibly be taken to ensure that the pre-fitted plastic fastening element leaves at least part of the polygonal shape 22 of the head section 20 free in order to still be able to exert the test torque in the body-in-white phase.

Furthermore, the stud 10 can also be welded onto a workpiece 32 without pre-fitted plastic part, as described above. A plastic fastening element such as a clip 34 can then be fastened thereto, for example in an assembly area.

The stud 10 is preferably welded on by arc welding with drawn arc. In the process, the annular surface 19 is set down on the workpiece 32. An electric pilot current is then switched on. The stud 10 is then lifted again from the workpiece 32, in the course of which an arc is struck. After that, if need be a cleaning current is switched on (not absolutely necessary). Finally, a welding current which is markedly higher than the pilot current is switched on, the energy being sufficient in order to fuse the front annular surface 19 and a corresponding mating surface on the workpiece 32. Finally, the stud 10 is lowered again onto the workpiece 32, in the course of which the molten pools fuse together. The welding current is then switched off. The complete molten pool solidifies, and the stud 10 is integrally connected to the workpiece 32.

Although exemplary embodiments of the present invention have been shown and described, it will be appreciated by those skilled in the art that changes may be made to these embodiments without departing from the invention, the scope of which is defined in the appended claims.

## Claims

1. A stud (10) for stud welding, having a shank (12), having an axially adjoining flange (14) which projects radially relative to the shank (12) and having an annular section (16) which axially adjoins the flange (14) and whose front, radially extending annular surface (19) is designed as a welding surface which is to be welded to a workpiece (32), wherein the annular section (16) directly adjoins the flange (14), and the annular section (16) and the flange (14) form a head section (20) which has a uniform outside diameter (D) throughout, and **characterized in that** the outer circumference of said flange (14) is of polygonal design in order to be able to apply a test torque (T) to the stud (10) by means of a tool (40), and the polygonal shape (22) of the flange (14) extends over the annular section (16) up to its front annular surface (19).

2. The stud as claimed in claim 1, wherein the stud (10) is made in one piece of metal, in particular steel.

3. The stud as claimed in claim 1 or 2, wherein the stud (10) is produced by a cold forming process.

4. The stud as claimed in one of claims 1 to 3, wherein the shank (12) has a thread (24).

5. The stud as claimed in one of claims 1 to 4, wherein the polygonal shape (22) is an octagonal shape (22).

6. The stud as claimed in one of claims 1 to 5, wherein the ratio of the axial length (K) of the head section to the outside diameter (D) of the head section (20) is within the range of 1/7 to 3/4.

7. The stud as claimed in claims 1 to 6, wherein the ratio of the axial length (F) of the flange (14) to the axial length (K) of the head section (20) is within the range of 3/10 to 5/10.

8. The stud as claimed in one of claims 1 to 7, wherein the ratio of the axial length (F) of the flange (14) to the axial length (K) of the head section (20) is less than 5/10.

9. A fastening arrangement (30) having a workpiece (32) and a stud (10) welded to the workpiece (32), wherein the workpiece (32) has a thickness (W) of less than 1 mm, in particular less than 0.8 mm, and wherein the stud is a stud (10) as claimed in one of claims 1 to 8.

10. A method of welding a stud (10) to a workpiece (32) and of checking the strength of the welded joint, comprising the steps:
- providing a stud (10) as claimed in one of claims 1 to 8;
- welding the stud (10) onto the workpiece (32), in particular by drawn-arc stud welding; and
- attaching a tool (40) to the head section (20) of the stud (10) and applying a predetermined torque (T) to the stud (10) in order to check the strength of the welded joint.

11. The use of a stud (10) as claimed in one of claims 1 to 8 for welding onto a workpiece (32), the thickness (W) of which is less than 1 mm, in particular less than 0.8 mm.

## Patentansprüche

1. Bolzen (10) zum Bolzenschweißen, mit einem Schaft (12), der einen axial dazu benachbarten Flansch (14) aufweist, der radial relativ zu dem Schaft (12) vorsteht, und mit einem ringförmigen Abschnitt (16), der axial benachbart ist zu dem Flansch (14) und dessen vordere, sich radial erstreckende ringförmige Fläche (19) als eine Schweißfläche ausgebildet ist, die an ein Werkstück (32) zu schweißen ist, wobei der ringförmige Abschnitt (16) direkt benachbart ist zu dem Flansch (14), und wobei der ringförmige Abschnitt (16) und der Flansch (14) einen Kopfabschnitt (20) bilden, der durchgehend einen einheitlichen Außendurchmesser (D) aufweist, **dadurch gekennzeichnet, dass** der Außenumfang des Flansches (14) eine polygonale Form besitzt, um mittels eines Werkzeuges (40) ein Testdrehmoment (T) an den Bolzen (10) anlegen zu können, und **dadurch**, dass die polygonale Form (22) des Flansches (14) sich über den ringförmigen Abschnitt (16) hinweg erstreckt, und zwar bis zu dessen vorderer ringförmiger Fläche (19).

2. Bolzen nach Anspruch 1, wobei der Bolzen (10) einstückig aus Metall hergestellt ist, insbesondere aus Stahl.

3. Bolzen nach Anspruch 1 oder 2, wobei der Bolzen (10) durch einen Kaltverformungsprozess hergestellt ist.

4. Bolzen nach einem der Ansprüche 1 bis 3, wobei der Schaft (12) ein Gewinde (24) aufweist.

5. Bolzen nach einem der Ansprüche 1 bis 4, wobei die polygonale Form (22) eine oktagonale Form (22) ist.

6. Bolzen nach einem der Ansprüche 1 bis 5, wobei das Verhältnis der axialen Länge (K) des Kopfabschnittes zu dem Außendurchmesser (D) des Kopfabschnittes (20) in dem Bereich von 1/7 bis 3/4 liegt.

7. Bolzen nach einem der Ansprüche 1 bis 6, wobei das Verhältnis der axialen Länge (F) des Flansches (14) zu der axialen Länge (K) des Kopfabschnittes (20) innerhalb des Bereiches von 3/10 bis 5/10 liegt.

8. Bolzen nach einem der Ansprüche 1 bis 7, wobei das Verhältnis der axialen Länge (F) des Flansches (14) zu der axialen Länge (K) des Kopfabschnittes (20) kleiner ist als 5/10.

9. Befestigungsanordnung (30) mit einem Werkstück (32) und einem Bolzen (10), der an das Werkstück (32) geschweißt ist, wobei das Werkstück (32) eine Dicke (W) von weniger als 1 mm, insbesondere von weniger als 0,8 mm aufweist, und wobei der Bolzen ein Bolzen (10) nach einem der Ansprüche 1 bis 8 ist.

10. Verfahren zum Schweißen eines Bolzens (10) an ein Werkstück (32) und zum Überprüfen der Festigkeit der Schweißverbindung, mit den Schritten:
- Bereitstellen eines Bolzens (10) nach einem der Ansprüche 1 bis 8;
- Schweißen des Bolzens (10) an das Werkstück (32), insbesondere durch Lichtbogen-Bolzenschweißen; und
- Anlegen eines Werkzeuges (40) an den Kopfabschnitt (20) des Bolzens (10) und Aufbringen eines vorbestimmten Drehmomentes (T) auf den Bolzen (10), um die Festigkeit der Schweißverbindung zu überprüfen.

11. Verwendung eines Bolzens (10) nach einem der Ansprüche 1 bis 8 zum Schweißen an ein Werkstück (32), dessen Dicke (W) kleiner ist als 1 mm, insbesondere kleiner ist als 0,8 mm.

## Revendications

1. Goujon (10) pour soudage de goujon, comprenant une tige (12) présentant un collet axialement jointif (14) qui fait saillie radialement par rapport à la tige (12), et présentant une section annulaire (16) qui est axialement jointive au collet (14) et dont la surface annulaire avant s'étendant radialement (19) est conçue comme une surface de soudage qui doit être soudée à une pièce (32), la section annulaire (16) étant directement jointive au collet (14), et la section annulaire (16) et le collet (14) formant une partie de tête (20) qui présente un diamètre extérieur uniforme (D) sur toute sa longueur, et **caractérisé en ce que** la circonférence extérieure dudit collet (14) est de conception polygonale de manière à être capable d'appliquer un couple de test (T) au goujon (10) par intermédiaire d'un outil (40), la forme polygonale (22) du collet (14) s'étendant sur la section annulaire (16) jusqu'à sa surface annulaire avant (19).

2. Goujon selon la revendication 1, dans lequel le goujon (10) est constitué d'une pièce de métal, en particulier d'acier.

3. Goujon selon la revendication 1 ou 2, dans lequel le goujon (10) est produit par un procédé de formage à froid.

4. Goujon selon l'une quelconque des revendications 1 à 3, dans lequel la tige (12) comporte un filet (24).

5. Goujon selon l'une quelconque des revendications 1 à 4, dans lequel la forme polygonale (22) est une forme octogonale (22).

6. Goujon selon l'une quelconque des revendications 1 à 5, dans lequel le rapport de la longueur axiale (K) de la section de tête au diamètre extérieur (D) de la section de tête (20) est compris à l'intérieur de la gamme de 1/7 à 3/4.

7. Goujon selon l'une quelconque des revendications 1 à 6, dans lequel le rapport de la longueur axiale (F) du collet (14) à la longueur axiale (K) de la section de tête (20) est compris à l'intérieur de la gamme de 3/10 à 5/10.

8. Goujon selon l'une quelconque des revendications 1 à 7, dans lequel le rapport de la longueur axiale (F) du collet (14) à la longueur axiale (K) de la section de tête (20) est inférieur à 5/10.

9. Agencement de fixation (30) comprenant une pièce (32) et un goujon (10) soudé sur la pièce (32), dans lequel la pièce (32) présente une épaisseur (W) qui est inférieure à 1 mm, en particulier inférieure à 0,8 mm, et dans lequel le goujon est un goujon (10) selon l'une quelconque des revendications 1 à 8.

10. Procédé pour souder un goujon (10) sur une pièce (32), et pour vérifier la solidité du joint soudé, comprenant les étapes suivantes:
- prévoir un goujon (10) selon l'une quelconque des revendications 1 à 8;
- souder le goujon (10) sur la pièce (32), en particulier par une opération de soudage de goujon par arc étiré; et
- attacher un outil (40) à la section de tête (20) du goujon (10) et appliquer un couple prédéterminé (T) au goujon (10) dans le but de vérifier la solidité du joint soudé.

11. Utilisation d'un goujon (10) selon l'une quelconque des revendications 1 à 8 pour le soudage sur une pièce (32) dont l'épaisseur (W) est inférieure à 1 mm, en particulier inférieure à 0,8 mm.
